# FASCICULE DE BREVET EUROPEEN

(11) **EP 3 159 258 B1**
(45) Date de publication et mention de la délivrance du brevet: **05.06.2019**
(21) Numéro de dépôt: 16192208.3
(22) Date de dépôt: 04.10.2016
(51) Int. Cl.: B64C 13/10, B64C 27/56, B64C 27/68, B64C 27/57, B64C 13/08, B60K 26/02

(54) **SYSTEME DE COMMANDE D'UN ROTOR DE GIRAVION, GIRAVION EQUIPE D'UN TEL SYSTEME ET METHODE DE COMMANDE ASSOCIEE**
SYSTEM ZUM STEUERN EINES ROTORS EINES DREHFLÜGELFLUGZEUGS, DREHFLÜGELFLUGZEUG, DAS MIT EINEM SOLCHEN SYSTEM AUSGESTATTET IST, UND ENTSPRECHENDE STEUERUNGSMETHODE
A SYSTEM FOR CONTROLLING A ROTORCRAFT ROTOR, A ROTORCRAFT FITTED WITH SUCH A SYSTEM, AND AN ASSOCIATED CONTROL METHOD

(30) Priorité: 23.10.2015 FR 1502243
(43) Date de publication de la demande: 26.04.2017
(73) Titulaire: Airbus Helicopters, 13725 Marignane Cedex (FR)
(72) Inventeur: VALLART, Jean-Baptiste, 13100 AIX EN PROVENCE (FR); BYZERY, Roméo, 13003 MARSEILLE (FR)
(74) Mandataire: GPI & Associés

(56) Documents cités:
- EP-A1- 2 258 616
- EP-A1- 2 457 792
- EP-A1- 2 821 341

## Description

L'invention se rapporte à un système de commande permettant de commander un rotor de giravion. Un tel système de commande est adapté pour permettre de modifier le pas collectif et/ou le pas cyclique des pales d'un rotor principal ou d'un rotor arrière pour permettre notamment de modifier l'inclinaison du plan d'un rotor principal défini à chaque instant par le mouvement de rotation des extrémités libres des pales du rotor. Cette inclinaison permet de modifier la direction de la force sustentatrice produite par un rotor principal et par suite rend possible les différentes configurations de vol spécifiques d'un giravion.

L'invention concerne également un giravion équipé d'un tel système de commande d'un rotor et une méthode de commande d'un rotor au moyen d'un organe de pilotage. En outre, pour la suite de la présente demande, on entend désigner par organe de pilotage tout dispositif de commande apte à être manoeuvré manuellement par un pilote ou automatiquement que ce soit dans un cockpit de pilotage ou à l'extérieur du giravion lorsque celui-ci n'embarque pas de pilote. Un tel organe de pilotage peut ainsi se présenter sous diverses formes et notamment, d'une part, celle d'un levier de pas cyclique ou d'un manche de pas collectif pour manoeuvrer le pas des pales d'un rotor, c'est-à-dire aussi l'incidence aérodynamique de ces pales, d'un "mini-manche", également désigné en langue anglaise par le terme "joystick", de pas cyclique ou de pas collectif, ou encore d'autre part, celle d'un palonnier permettant de modifier l'angle de pas des pales d'un rotor arrière de giravion.

De façon conventionnelle, les systèmes de commande de giravion comportent des organes de pilotage présentant des grands bras de levier et/ou des débattements importants entre deux butées physiques de la course de déplacement d'un organe de pilotage. En effet dans certains cas, la course de l'extrémité libre d'un manche de pas collectif conventionnel peut être très importante et supérieure à plusieurs dizaines de centimètres, par exemple.

Par ailleurs, avec de tels organes de pilotage conventionnels, on utilise généralement une seule commande de pilotage proportionnelle en position. Dans ces conditions, une position du manche de pas collectif correspond par exemple à une position invariante du plan rotor du giravion.

Un tel mode de fonctionnement est notamment mis en oeuvre dans le cas d'un système de commande mécanique où l'organe de pilotage et le rotor sont liés mécaniquement par une pluralité de bielles de renvois, de biellettes et de plateaux.

Dans ce cas, le débattement important d'un manche de pas collectif par exemple permet de couvrir toute la plage de commande du rotor et de piloter le giravion avec une sensibilité optimale. Pour chaque déplacement du manche de pas collectif, on effectue un déplacement proportionné des organes du rotor et la réponse du giravion qui s'en suit est contrôlable.

De plus, le débattement important du manche de pas collectif permet également de fournir un bras de levier suffisant pour contrer les efforts de commande importants.

Cependant, même avec un débattement important le maintien du manche dans une position déterminée peut se révéler complexe à réaliser ou inconfortable. Pour cette raison, un dispositif d'assistance, généralement appelé sous le terme de "boitier de trim", permet au pilote de placer le manche de pas collectif dans une position donnée et de laisser des moyens aptes à fournir un effort de compensation maintenir le manche de pas collectif dans cette position. Dans le langage spécifique du pilotage de giravion, pour désigner cette fonction on utilise alors souvent l'expression "ancrer le manche" ou encore "annuler les efforts" (sous entendu sur le manche).

Par ailleurs, pour encore limiter les efforts dans l'organe de pilotage et améliorer le confort de pilotage, il a ensuite été développé des commandes électriques ou optiques permettant de piloter les différents mouvements d'un rotor. Dans ce cas, un calculateur reçoit des informations représentatives d'une position du manche de pas collectif, du levier de pas cyclique ou du palonnier et commande ensuite au moins une servocommande en proportion. Cette au moins une servocommande permet ainsi de commander les mouvements du rotor. Un tel système de commande électrique ou optique est donc avantageux en ce qu'il permet de désaccoupler mécaniquement l'organe de pilotage et le rotor qu'il pilote.

En outre, à des fins de simplification d'équipement, un organe de pilotage, tel que notamment un mini-manche, peut de surcroît être passif. Dans ce cas, il ne comporte aucune motorisation apte à asservir sa position. Un tel mini-manche revient alors à sa position neutre d'effort si le pilote n'exerce plus de force de maintien en position sur celui-ci.

Cependant dans ce cas, il peut être difficile pour le pilote de savoir si la position courante d'une servocommande pilotée par le mini-manche, est proche d'une limitation de sa plage de commande. En effet, l'organe de pilotage peut être positionné dans une position centrale de sa course, correspondant à un "neutre d'effort", mais cette position peut être complétement décorrélée de la consigne transmise à la servocommande pour commander le mouvement du rotor. Ainsi, la commande associée à la position courante de la servocommande, qui sera désignée dans la suite de la demande par le terme plus général de commande, peut quant à elle être proche d'une limitation.

Par ailleurs, le document EP 2 258 616 présente un procédé et un système de commande et de régulation motrice pour hélicoptère hybride. Il décrit en outre la possibilité de limiter la propulsion d'un rotor lorsqu'une marge à piquer se réduit en dessous d'un seuil prédéfini.

Cependant, dans ce document EP 2 258 616 rien n'indique comment la loi de pilotage de la commande de la propulsion est modifiée par une unité de commande.

Le document EP 2 821 341 présente quant à lui un moyen permettant la prise des commandes d'un aéronef utilisant initialement un système de pilotage automatique.

Cependant, un tel document ne décrit pas une modification d'une loi de pilotage de la commande d'un rotor en fonction de l'évolution d'une marge courante de commande des mouvements d'un rotor.

Enfin le document EP 2 457 792 décrit un dispositif de pilotage pour véhicule reflétant l'arrière plan technologique de l'invention et ne permettant donc pas de modifier une loi de pilotage de la commande d'un rotor.

La présente invention a alors pour objet de proposer un système de commande permettant de s'affranchir des critiques mentionnées ci-dessus. Ce système de commande permet en outre d'améliorer la sensibilité de la commande des mouvements d'un rotor de giravion à proximité des limitations de cette commande des mouvements du rotor.

Un autre objectif de l'invention est également d'informer le pilote du giravion qu'il dispose d'une marge de commande limitée et, autrement dit, qu'il est proche des limitations de la commande des mouvements du rotor.

L'invention se rapporte donc à un système de commande pour commander un rotor d'un giravion. En outre, ce système de commande comporte au moins un organe de pilotage apte à piloter au moins une commande des mouvements d'au moins un rotor.

Ce système de commande est défini par la revendication.

L'organe de pilotage peut être un mini-manche de pas collectif ou de pas cyclique ainsi qu'un palonnier et permet de piloter une commande telle une servocommande pour commander les mouvements d'un rotor de giravion. Cette
commande permet alors par exemple de modifier l'orientation angulaire, c'est-à-dire le pas collectif et/ou le pas cyclique des pales d'un rotor principal ou d'un rotor arrière. Une telle commande peut ainsi permettre de modifier l'inclinaison du plan du rotor défini à chaque instant par le mouvement de rotation des extrémités libres des pales du rotor.

En effet, la manoeuvre d'un rotor nécessite généralement une assistance par des servocommandes permettant au pilote de gouverner le giravion avec précision et sans fournir des efforts importants. De façon générale, on utilise par exemple trois servocommandes pour actionner un plateau de pas cyclique d'un rotor principal et dans certains cas particuliers d'un rotor arrière. De la sorte, la manoeuvre du giravion est rendue possible dans tous les axes : roulis, tangage et lacet. Il est à noter qu'une seule servocommande peut être mise en oeuvre sur un rotor arrière dans la mesure où le contrôle en lacet d'un giravion ne rend pas obligatoire un pilotage du pas cyclique des pales de ce type de rotor.

Ainsi, pour la suite de la demande, et à des fins de simplification de la compréhension de l'invention, on pourra indiquer que l'organe de pilotage est apte à piloter une commande ou servocommande des mouvements d'un rotor sans pour autant limiter la portée de l'invention à cet unique exemple de réalisation. Le cas du pilotage de plusieurs commandes avec un unique organe de pilotage est en effet un autre exemple de réalisation couvert par la présente invention.

En outre les moyens de calcul, les moyens de comparaison et l'unité de commande peuvent être formés par des organes distincts et disjoints les uns des autres ou encore être mis en oeuvre par un calculateur unique réalisant ces différentes fonctions par exemple au moyen de différents algorithmes.

Un tel système de commande est remarquable en ce que, lorsque la marge courante de commande est inférieure ou égale au seuil prédéterminé de marge de commande, l'unité de commande modifie une sensibilité de la loi de pilotage de la commande des mouvements du (ou des) rotor(s) pour qu'une position courante de l'organe de pilotage soit proportionnelle à une position courante de la commande des mouvements du (ou des) rotor(s).

Ainsi, lorsque la marge courante de commande est inférieure ou égale au seuil de marge prédéterminé, la loi de pilotage de la servocommande est modifiée par l'unité de commande pour faciliter le pilotage du giravion dans cette zone critique proche des limitations de la commande. Cette modification de la loi de pilotage peut par exemple permettre d'améliorer la sensibilité de contrôle de la commande avec l'organe de pilotage lorsque la position courante de la commande est proche de l'une de ses limitations.

Plus particulièrement, la loi de pilotage est adaptée pour établir une relation proportionnelle entre la position courante de l'organe de pilotage et la position courante de la servocommande qui est proche de sa limitation. Une telle relation proportionnelle est obtenue au moyen d'un gain également appelé sensibilité de la loi de pilotage.

Une telle adaptation de la loi de pilotage a notamment pour objectif de fournir une sensibilité de contrôle adéquate permettant un pilotage fin des mouvements du (ou des) rotor(s) à l'approche de la limitation de la servocommande considérée.

Par ailleurs, le système de commande comporte une unité de gestion de l'organe de pilotage. Une telle unité de gestion permet alors de rendre inopérant l'organe de pilotage sur la commande des mouvements du (ou des) rotor(s) lorsque la marge courante de commande est inférieure ou égale au seuil
prédéterminé de marge de commande, l'organe de pilotage étant inopérant sur une plage prédéterminée, dite "zone morte", de positions de l'organe de pilotage.

Ainsi dans une telle zone morte, les positions de l'organe de pilotage n'entraînent aucune variation de la position courante de la servocommande considérée qui se trouve proche d'une limitation. En outre, la zone morte est donc mise en oeuvre par l'unité de gestion lorsque la servocommande est proche d'une limitation. Une telle zone morte à appliquer est alors fonction du seuil prédéterminé de marge de commande et est choisie pour que la commande se retrouve sur sa limitation lorsque l'organe de pilotage est également en butée sur sa course.

De plus, l'unité de commande peut comporter des moyens d'alerte aptes à générer un signal sensoriel permettant d'informer le pilote du giravion que la marge courante de commande est inférieure ou égale au seuil prédéterminé de marge de commande.

De cette manière, le pilote du giravion est alerté dès lors que l'une au moins des servocommandes pilotant les mouvements du (ou des) rotor(s) est proche d'une limitation.

En pratique, un tel signal sensoriel peut être choisi parmi le groupe comportant les signaux sonores, les signaux lumineux et/ou visuels, les signaux d'efforts s'opposant au déplacement manuel de l'organe de pilotage et les signaux vibratoires.

Bien entendu un tel signal sensoriel peut également consister en une combinaison de plusieurs signaux tels des signaux sonores, lumineux et vibratoires notamment.

En outre, les signaux vibratoires peuvent être générés par un vibreur solidaire de l'organe de pilotage.

Dans ce cas, le franchissement du seuil de marge prédéterminé pour la servocommande peut s'accompagner d'une vibration dans l'organe de pilotage qui peut être associée au pilotage de cette commande.

L'invention se rapporte également à un giravion comportant au moins un rotor permettant de sustenter et/ou de propulser ce giravion ainsi qu'au moins un organe de pilotage apte à piloter au moins une commande des mouvements du (ou des) rotor(s).

Ce giravion se caractérise en ce qu'il comporte un système de commande tel que décrit précédemment et est défini par la revendication 5.

La présente invention a aussi pour objet une méthode de commande d'au moins un rotor d'un giravion par au moins un organe de pilotage apte à piloter au moins une commande des mouvements du (ou des) rotor(s).

Une telle méthode est définie par la revendication 6.

La méthode permet d'adapter la loi de pilotage de la servocommande lorsque celle-ci est proche d'une limitation. Une telle adaptation de la loi de pilotage permet notamment d'améliorer la précision et la finesse du pilotage du giravion à l'approche de cette limitation de la commande.

Plus précisément, l'étape consistant à modifier la loi de pilotage de la servocommande peut être mise en oeuvre en appliquant un coefficient de proportionnalité, ou gain entre la position courante de l'organe de pilotage et la position courante de la servocommande.

Par ailleurs, la méthode comporte une étape consistant à rendre inopérant l'organe de pilotage sur la commande des mouvements du (ou des) rotor(s) lorsque la marge courante de commande est inférieure ou égale au seuil prédéterminé de marge de commande, l'organe de pilotage étant inopérant sur une plage prédéterminée, dite "zone morte", de positions de l'organe de pilotage.

Ainsi, l'étape consistant à rendre inopérant l'organe de pilotage est mise en oeuvre en inhibant la consigne de commande associée à l'organe de pilotage et en rendant temporairement invariante la position courante de la servocommande dans la zone morte de positions de l'organe de pilotage.

Au surplus, une telle méthode de commande peut comporter une étape consistant à générer un signal sensoriel permettant d'informer le pilote du giravion que la marge courante de commande est inférieure ou égale au seuil prédéterminé de marge de commande.

De cette façon, sachant que la position courante de la servocommande est proche d'une limitation, le pilote peut adapter le pilotage de la commande des mouvements du (ou des) rotor(s) et ainsi agir sur la position courante de l'organe de pilotage.

L'invention et ses avantages apparaîtront avec plus de détails dans le cadre de la description qui suit avec des exemples donnés à titre illustratif en référence aux figures annexées dans lesquelles :
- la figure 1 représente schématiquement un giravion conforme à l'invention,
- la figure 2 est un schéma représentatif d'un système de commande conforme à l'invention, et,
- la figure 3 un schéma fonctionnel d'une méthode de commande conforme à l'invention.

Comme déjà évoqué, l'invention concerne un système de commande permettant de commander au moins un rotor de giravion et, par suite le giravion associé.

Les éléments présents dans plusieurs figures distinctes sont affectés d'une seule et même référence.

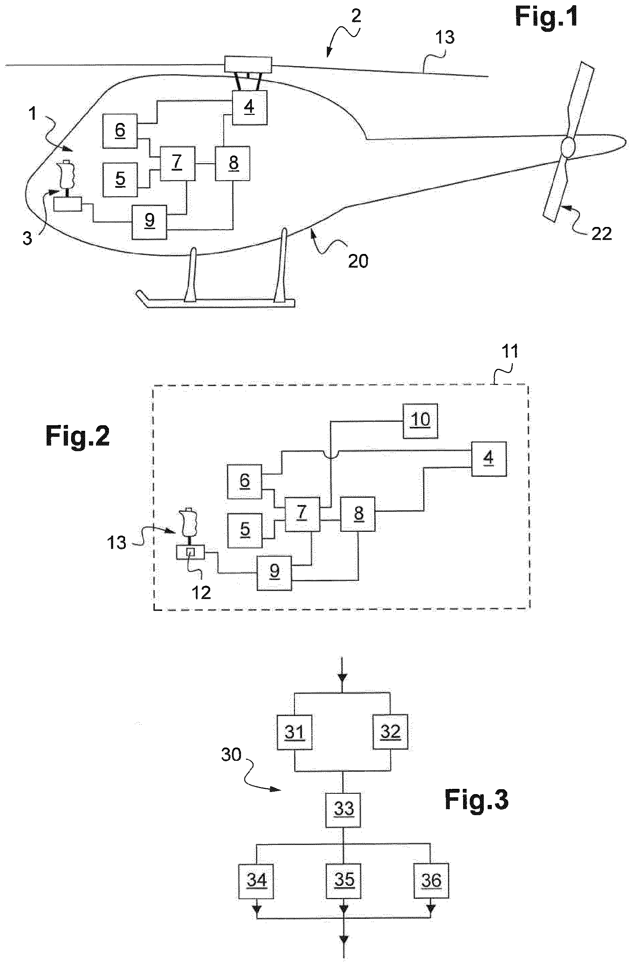

Tel que représenté à la figure 1, un tel giravion 20 est ainsi équipé d'un système de commande 1 pour piloter une commande 4 des mouvements du rotor 2. En outre, une telle commande 4 peut ainsi se présenter sous la forme d'une servocommande pour modifier l'orientation angulaire, c'est-à-dire le pas collectif et/ou le pas cyclique des pales 23 d'un rotor principal 2 ou d'un rotor arrière 22. Une telle commande 4 peut également permettre de modifier l'inclinaison du plan du rotor 2 défini à chaque instant par le mouvement de rotation des extrémités libres des pales 23 du rotor 2.

Ainsi, le système de commande 1 comporte un organe de pilotage 3 qui est, tel que représenté, un mini-manche destiné à être manoeuvré manuellement par le pilote du giravion 20 pour piloter par exemple la commande 4 des mouvements d'au moins un rotor 2 et/ou 22. Par suite, à des fins de simplification de la rédaction de la présente demande et de façon préférentielle, la suite de la description détaillée de l'invention se rapportera à un système de commande 1 des mouvements de deux rotors 2 et 22 simultanément sans bien évidemment limiter la portée de l'invention à cet exemple de réalisation particulier.

Ce système de commande 1 comporte également une mémoire 5 pour stocker une information représentative d'un seuil prédéterminé de marge de commande. Un tel système de commande 1 comporte aussi des moyens de calcul 6 de façon à calculer à intervalle de temps régulier une marge courante de commande correspondant à l'écart entre une position courante et une limitation de la commande 4 des mouvements des rotors 2 et 22.

Le système de commande 1 comporte alors des moyens de comparaison 7 de manière à comparer périodiquement la marge courante de commande avec le seuil prédéterminé de marge de commande.

Enfin un tel système de commande 1 comporte également une unité de commande 8 permettant de modifier une loi de pilotage de la commande 4 des mouvements des rotors 2 et 22 lorsque la marge courante de commande est calculée comme étant inférieure ou égale au seuil prédéterminé de marge de commande.

En effet, il est avantageux d'adapter la loi de pilotage de la commande 4 des mouvements des rotors 2 et 22 si cette commande 4 se trouve proche de l'une de ses limitations. Une telle proximité avec une limitation de la commande 4 peut alors être identifiée par une comparaison entre la marge courante de commande et le seuil prédéterminé de marge de commande mémorisé dans la mémoire 5.

En pratique, l'unité de commande 8 modifie la loi de pilotage en rendant alors proportionnelle la position courante de la commande avec une position courante de l'organe de pilotage 3.

Tel que représenté, ce système de commande 1 peut également présenter une unité de gestion 9 de l'organe de pilotage 3. Une telle unité de gestion 9 permet notamment de rendre inopérant l'organe de pilotage 3 sur une plage prédéterminée de positions de l'organe de pilotage 3. Une telle plage prédéterminée de positions est alors désignée par l'expression de "zone morte" puisque la commande 4 n'est alors pas modifiée tant que l'organe de pilotage 3 reste à l'intérieur de celle-ci.

Selon une variante de l'invention telle que représentée à la figure 2, le système de commande 11 peut également comporter des moyens d'alerte 10 de façon à alerter le pilote du giravion 20 si la commande 4 est proche d'une limitation.

Des tels moyens d'alerte 10 permettent ainsi de générer un signal sensoriel qui est par exemple sonore, visuel, résistif dans l'organe de pilotage ou encore vibratoire.

Ainsi, un tel système de commande 11 peut également comporter un organe de pilotage 13 équipé d'un vibreur 12 pour notamment permettre d'alerter le pilote du giravion 20 que l'une de des commandes des mouvements du (ou des) rotor(s) est proche d'une limitation.

Tel que représenté à la figure 3, l'invention concerne également une méthode de commande 30 des rotors 2 et 22 de giravion 20. Une telle méthode de commande 30 est alors notamment mise en oeuvre au moyen d'un organe de pilotage 3, 13 tel un mini-manche ou un manche de pas cyclique, un levier de pas collectif ainsi qu'un palonnier manoeuvré par un pilote du giravion 20.

Une telle méthode 30 comporte alors une pluralité d'étapes présentées ci-après. Ainsi la méthode 30 comporte une étape 31 consistant à stocker dans une mémoire 5 une information représentative d'un seuil prédéterminé de marge de commande.

La méthode 30 comporte également une étape 32 qui peut par exemple être opérée en parallèle de l'étape 31 et consistant à calculer une marge courante de commande définie comme étant l'écart entre une position courante et une limitation de la commande 4 des mouvements des rotors 2 et 22. Puis, la méthode 30 comporte une étape 33 consistant à comparer la marge courante de commande avec le seuil prédéterminé de marge de commande.

Enfin, la méthode 30 comporte une étape 34 consistant à modifier une loi de pilotage de la commande 4 des mouvements des rotors 2 et 22 lorsque la marge courante de commande est inférieure ou égale au seuil prédéterminé de marge de commande.

En pratique, une telle étape 34 consistant à modifier la loi de pilotage de la commande 4 des mouvements des rotors 2 et 22 peut consister plus précisément à rendre proportionnelle une position courante de l'organe de pilotage 3, 13 avec une position courante de la commande 4 des mouvements du rotor 2 ou du rotor 22.

Telle que représentée, une telle méthode 30 peut également comporter une étape 35 permettant de rendre inopérant l'organe de pilotage 3, 13 sur la commande 4 des mouvements des rotors 2 et 22 lorsque la marge courante de commande est inférieure ou égale au seuil prédéterminé de marge de commande. Dans ce cas, l'organe de pilotage 3, 13 est rendu inopérant sur une plage prédéterminée, dite "zone morte", de positions de l'organe de pilotage 3, 13.

Par ailleurs, la méthode 30 peut également comporter une étape 36 permettant de générer un signal sensoriel pour informer le pilote du giravion 20 que la marge courante de commande est inférieure ou égale audit seuil prédéterminé de marge de commande. Le pilote du giravion 20 est alors alerté et peut adapter le pilotage du giravion 20 en fonction de la proximité avec la limitation de la commande.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de commande (1, 11) pour commander au moins un rotor (2, 22) d'un giravion (20), ledit système de commande (1, 11) comportant au moins un organe de pilotage (3, 13) apte à piloter au moins une commande (4) des mouvements dudit au moins un rotor (2, 22), ledit système de commande (1, 11) comportant :
• au moins une mémoire (5) permettant de stocker une information représentative d'un seuil prédéterminé de marge de commande,
• des moyens de calcul (6) pour calculer une marge courante de commande définie comme étant l'écart entre une position courante et une limitation de ladite commande (4) des mouvements dudit au moins un rotor (2, 22),
• des moyens de comparaison (7) pour comparer ladite marge courante de commande avec ledit seuil prédéterminé de marge de commande,
• une unité de commande (8) pour modifier une loi de pilotage de ladite commande (4) des mouvements dudit au moins un rotor (2, 22) lorsque ladite marge courante de commande est inférieure ou égale audit seuil prédéterminé de marge de commande,
**caractérisé en ce que**, lorsque ladite marge courante de commande est inférieure ou égale audit seuil prédéterminé de marge de commande, ladite unité de commande (8) modifie une sensibilité de ladite loi de pilotage de ladite commande (4) des mouvements dudit au moins un rotor (2, 22) pour qu'une position courante dudit organe de pilotage (3, 13) soit proportionnelle à une position courante de ladite commande (4) des mouvements dudit au moins un rotor (2, 22) et **en ce que** ledit système de commande (1, 11) comporte une unité de gestion (9) dudit organe de pilotage (3, 13), ladite unité de gestion (9) permettant, lorsque ladite marge courante de commande est inférieure ou égale audit seuil prédéterminé de marge de commande, de rendre temporairement invariante une position courante de ladite commande (4) des mouvements dudit au moins un rotor (2, 22) lors d'un déplacement dudit organe de pilotage (3, 13) sur une plage prédéterminée, dite "zone morte", de positions dudit organe de pilotage (3, 13).

2. Système de commande selon la revendication 1,
**caractérisé en ce que** ledit système de commande (11) comporte des moyens d'alerte (10) aptes à générer un signal sensoriel permettant d'informer le pilote du giravion (20) que ladite marge courante de commande est inférieure ou égale audit seuil prédéterminé de marge de commande.

3. Système de commande selon la revendication 2,
**caractérisé en ce que** ledit signal sensoriel est choisi parmi le groupe comportant les signaux sonores, les signaux lumineux et/ou visuels, les signaux d'efforts s'opposant au déplacement manuel dudit organe de pilotage (3) et les signaux vibratoires.

4. Système de commande selon la revendication 3,
**caractérisé en ce que** lesdits signaux vibratoires sont générés par un vibreur (12) solidaire dudit organe de pilotage (13).

5. Giravion (20) comportant au moins un rotor (2, 22) permettant de sustenter et/ou de propulser ledit giravion (20) ainsi qu'au moins un organe de pilotage (3) apte à piloter au moins une commande (4) des mouvements dudit au moins un rotor (2, 22).
**caractérisé en ce que** ledit giravion (20) comporte un système de commande (1, 11) selon l'une quelconque des revendications 1 à 4.

6. Méthode de commande (30) d'au moins un rotor (2, 22) d'un giravion (20) par au moins un organe de pilotage (3, 13) apte à piloter au moins une commande (4) des mouvements dudit au moins un rotor (2, 22), ladite méthode (30) comportant des étapes (31, 32, 33, 34) consistant à :
• stocker à une étape (31) une information représentative d'un seuil prédéterminé de marge de commande dans une mémoire (5),
• calculer à une étape (32) une marge courante de commande définie comme étant l'écart entre une position courante et une limitation de ladite au moins une commande (4) des mouvements dudit au moins un rotor (2, 22),
• comparer à une étape (33) ladite marge courante de commande avec ledit seuil prédéterminé de marge de commande,
• modifier à une étape (34) une loi de pilotage de ladite commande (4) des mouvements dudit au moins un rotor (2, 22) lorsque ladite marge courante de commande est inférieure ou égale audit seuil prédéterminé de marge de commande,
**caractérisée en ce que** ladite étape (34) consistant à modifier ladite loi de pilotage de ladite commande (4) des mouvements dudit au moins un rotor (2, 22) permet de modifier une sensibilité de ladite loi de pilotage de ladite commande (4) pour rendre proportionnelle une position courante dudit organe de pilotage (3, 13) avec une position courante de ladite commande (4) des mouvements dudit au moins un rotor (2, 22) et **en ce que** ladite méthode (30) comporte une étape (35) consistant à, lorsque ladite marge courante de commande est inférieure ou égale audit seuil prédéterminé de marge de commande, rendre temporairement invariante une position courante de ladite commande (4) des mouvements dudit au moins un rotor (2, 22) lors d'un déplacement dudit organe de pilotage (3, 13) sur une plage prédéterminée, dite "zone morte", de positions dudit organe de pilotage (3, 13)..

7. Méthode selon la revendication 6,
**caractérisée en ce que** ladite méthode (30) comporte une étape (36) consistant à générer un signal sensoriel permettant d'informer le pilote du giravion (20) que ladite marge courante de commande est inférieure ou égale audit seuil prédéterminé de marge de commande.

## Patentansprüche

1. Steuersystem (1, 11) zum Steuern mindestens eines Rotors (2, 22) eines Drehflüglers (20), wobei das Steuersystem (1, 11) mindestens ein Steuerelement (3, 13) umfasst, das eingerichtet ist, mindestens eine Steuerung (4) von Bewegungen des mindestens einen Rotors (2, 22) zu steuern, wobei das Steuersystem (1, 11) umfasst:
- mindestens einen Speicher (5) zum Speichern einer Information, die für einen vorbestimmten Schwellenwert einer Steuerspanne repräsentativ ist,
- Berechnungsmittel (6) zum Berechnen einer aktuellen Steuerspanne, die definiert ist als die Differenz zwischen einer aktuellen Position und einer Begrenzung der Bewegungen des mindestens einen Rotors (2, 22) durch die Steuerung (4),
- Vergleichsmittel (7) zum Vergleichen der aktuellen Steuerspanne mit dem vorbestimmten Schwellenwert der Steuerspanne,
- eine Steuereinheit (8) zum Modifizieren einer Steuerregel für die Steuerung (4) der Bewegungen des mindestens einen Rotors (2, 22), wenn die aktuelle Steuerspanne kleiner oder gleich dem vorbestimmten Schwellenwert der Steuerspanne ist,
**dadurch gekennzeichnet, dass**, wenn die aktuelle Steuerspanne kleiner oder gleich dem vorbestimmten Schwellenwert der Steuerspanne ist, die Steuereinheit (8) eine Empfindlichkeit der Steuerregel für die Steuerung (4) der Bewegungen des mindestens einen Rotors (2, 22) ändert, so dass eine aktuelle Position des Steuerelements (3, 13) proportional zu einer aktuellen Position der Steuerung (4) der Bewegungen des mindestens einen Rotors (2, 22) ist, und dass das Steuersystem (1, 11) eine Verwaltungseinheit (9) des Steuerelements (3, 13) umfasst, wobei die Verwaltungseinheit (9) es erlaubt, wenn die aktuelle Steuerspanne kleiner oder gleich dem vorbestimmten Schwellenwert der Steuerspanne ist, eine aktuelle Position der Steuerung (4) der Bewegungen des mindestens einen Rotors (2, 22) vorübergehend invariant zu machen, wenn sich das Steuerelement (3, 13) innerhalb eines vorbestimmten, als "Totzone " bezeichneten Bereichs von Positionen des Steuerelements (3, 13) bewegt.

2. Steuerungssystem nach Anspruch 1, **dadurch gekennzeichnet, dass** das Steuerungssystem (11) Warnmittel (10) umfasst, die eingerichtet sind, ein sensorisches Signal zu erzeugen, das es erlaubt, den Piloten des Drehflüglers (20) darüber zu informieren, dass die aktuelle Steuerspanne kleiner oder gleich dem vorbestimmten Schwellenwert der Steuerspannen ist.

3. Steuersystem nach Anspruch 2, **dadurch gekennzeichnet, dass** das sensorische Signal ausgewählt ist aus der Gruppe bestehend aus Ton-, Licht- und/oder Bildsignalen, Kraftsignalen, die einer manuellen Bewegung des Steuerelements (3) entgegenwirken, und Vibrationssignalen.

4. Steuersystem nach Anspruch 3, **dadurch gekennzeichnet, dass** die Schwingungssignale durch einen Vibrator (12) erzeugt werden, der mit dem Steuerelement (13) fest verbunden ist.

5. Drehflügler (20) mit mindestens einem Rotor (2, 22) zum Tragen und/oder Antreiben des Drehflüglers (20) und mindestens einem Steuerelement (3), das eingerichtet ist, mindestens eine Steuerung (4) der Bewegungen des mindestens einen Rotors (2, 22) zu steuern, **dadurch gekennzeichnet, dass** der Drehflügler (20) ein Steuersystem (1, 11) nach einem der Ansprüche 1 bis 4 umfasst.

6. Verfahren zum Steuern (30) mindestens eines Rotors (2, 22) eines Drehflüglers (20) durch mindestens ein Steuerelement (3, 13), das eingerichtet ist, mindestens eine Steuerung (4) der Bewegungen des mindestens einen Rotors (2, 22) zu steuern, wobei das Verfahren (30) Schritte (31, 32, 33, 34) umfasst, die darin bestehen:
- in einem Schritt (31) eine Information, die für einen vorbestimmten Schwellenwert der Steuerspanne repräsentativ ist, in einem Speicher (5) zu speichern,
- in einem Schritt (32) eine aktuelle Steuerspanne zu berechnen, die definiert ist als die Differenz zwischen einer aktuellen Position und einer Begrenzung der Bewegungen des mindestens einen Rotors (2, 22) durch die Steuerung (4),
- in einem Schritt (33) die aktuelle Steuerspanne mit dem vorbestimmten Schwellenwert der Steuerspanne zu vergleichen,
- in einem Schritt (34) eine Steuerregel für die Steuerung (4) der Bewegungen des mindestens einen Rotors (2, 22) zu modifizieren, wenn die aktuelle Steuerspanne kleiner oder gleich dem vorbestimmten Schwellenwert der Steuerspanne ist,
**dadurch gekennzeichnet, dass** der Schritt (34), der darin besteht, die Steuerregel der Steuerung (4) der Bewegungen des mindestens einen Rotors (2, 22) zu ändern, es erlaubt, eine Empfindlichkeit der Steuerregel der Steuerung (4) zu ändern, um eine aktuelle Position des Steuerelements (3, 13) zu einer aktuellen Position der Steuerung (4) der Bewegungen des mindestens einen Rotors (2,22) proportional zu machen, und dass das Verfahren (30) einen Schritt (35) umfasst, der darin besteht, wenn die aktuelle Steuerspanne kleiner oder gleich dem vorbestimmten Schwellenwert der Steuerspanne ist, eine aktuelle Position der Steuerung (4) der Bewegungen des mindestens einen Rotors (2, 22) vorübergehend invariant zu machen, wenn sich das Steuerelement (3, 13) in einem vorbestimmten, als "Totzone" bezeichneten Bereich von Positionen des Steuerelements (3, 13) bewegt.

7. Verfahren nach Anspruch 6, **dadurch gekennzeichnet, dass** das Verfahren (30) einen Schritt (36) des Erzeugens eines sensorischen Signals beinhaltet, um den Piloten des Drehflüglers (20) darüber zu informieren, dass die aktuelle Steuerspanne kleiner oder gleich der vorbestimmten Steuerspannenschwelle ist.

## Claims

1. Control system (1, 11) for controlling at least one rotor (2, 22) of a rotorcraft (20), the control system (1, 11) comprising at least one control unit (3, 13) capable of controlling at least one command (4) for the movements of the at least one rotor (2, 22), the control system (1, 11) comprising:
• at least one memory (5) for storing information representative of a predetermined threshold of the control margin,
• calculating means (6) for calculating a current control margin defined as being the difference between a current position and a restriction of the command (4) for the movements of the at least one rotor (2, 22),
• comparing means (7) for comparing the current control margin with the predetermined threshold of the control margin,
• a control unit (8) for altering a law for controlling the command (4) for the movements of the at least one rotor (2, 22) when the current control margin is less than or equal to the predetermined threshold of the control margin,
**characterised in that**, when the current control margin is less than or equal to the predetermined threshold of the control margin, the control unit (8) alters a sensitivity of the law for controlling the command (4) for the movements of the at least one rotor (2, 22) so that a current position of the control unit (3, 13) is proportional to a current position of the command (4) for the movements of the at least one rotor (2, 22) and **in that** the control system (1, 11) comprises a unit for managing (9) the control unit (3, 13), the management unit (9) rendering the current position of the command (4) for the movements of the at least one rotor (2, 22) temporarily invariant, when the current control margin is less than or equal to the predetermined threshold of the control margin, when the control unit (3, 13) is moved over a predetermined range, called the "dead zone", of positions of the control unit (3, 13).

2. Control system according to claim 1,
**characterised in that** the control system (11) comprises warning means (10) capable of generating a sensory signal for informing the pilot of the rotorcraft (20) that the current control margin is less than or equal to the predetermined threshold of the control margin.

3. Control system according to claim 2,
**characterised in that** the sensory signal is selected from among the group comprising the sensory signals, the light and/or visual signals, the effort signals inhibiting the manual movement of the control unit (3) and the vibratory signals.

4. Control system according to claim 3,
**characterised in that** the vibratory signals are generated by a vibration rig (12) rigidly connected to the control unit (13).

5. Rotorcraft (20) comprising at least one rotor (2, 22) for sustaining or propelling the rotorcraft (20) as well as at least one control unit (3) capable of controlling at least one command (4) for the movements of the at least one rotor (2, 22),
**characterised in that** the rotorcraft (20) comprises a control system (1, 11) according to any one of claims 1 to 4.

6. Method for controlling (30) at least one rotor (2, 22) of a rotorcraft (20) by at least one control unit (3, 13) capable of controlling at least one command (4) for the movements of the at least one rotor (2, 22), the method comprising steps (31, 32, 33, 34) consisting in:
• a step (31) of storing information representative of a predetermined threshold of the control margin in a memory (5),
• a step of calculating (32) a current control margin defined as being the difference between a current position and a restriction of the at least one command (4) for the movements of the at least one rotor (2, 22),
• a step of comparing (33) the current control margin with the predetermined threshold of the control margin,
• a step of altering (34) a law for controlling the command (4) for the movements of the at least one rotor (2, 22) when the current control margin is less than or equal to the predetermined threshold of the control margin,
**characterised in that** the step (34) consisting of altering the law for controlling the command (4) for the movements of the at least one rotor (2, 22) results in the altering of a sensitivity of the law for controlling the command (4) to ensure a current position of the control unit (3, 13) is proportional to a current position of the command (4) for the movements of the at least one rotor (2, 22) and **in that** the method (30) comprises a step (35) consisting of rendering the current position of the command (4) for the movements of the at least one rotor (2, 22) temporarily invariant, when the current control margin is less than or equal to the predetermined threshold of the control margin, when the control unit (3, 13) is moved over a predetermined range, called the "dead zone", of positions of the control unit (3, 13).

7. Method according to claim 6,
**characterised in that** the method (30) comprises a step (36) consisting of generating a sensory signal for informing the pilot of the rotorcraft (20) that the current control margin is less than or equal to the predetermined threshold of the control margin.
